# EUROPÄISCHE PATENTSCHRIFT

(11) **EP 3 036 452 B1**
(45) Veröffentlichungstag und Bekanntmachung des Hinweises auf die Patenterteilung: **01.05.2019**
(21) Anmeldenummer: 14796390.4
(22) Anmeldetag: 20.08.2014
(51) Int. Cl.: F16D 13/68, F16D 13/64

(54) **REIBELEMENT**
FRICTION ELEMENT
ÉLÉMENT DE FRICTION

(30) Priorität: 23.08.2013 AT 505222013
(43) Veröffentlichungstag der Anmeldung: 29.06.2016
(73) Patentinhaber: Miba Frictec GmbH, 4663 Laakirchen (AT)
(72) Erfinder: MÜHLEGGER, Markus, A-4812 Pinsdorf (AT)
(74) Vertreter: Burger, Hannes
(86) Internationale Anmeldenummer: PCT/AT2014/050178
(87) Internationale Veröffentlichungsnummer: WO 2015/024038

(56) Entgegenhaltungen:
- FR-A1- 2 916 028
- GB-A- 566 650
- US-A- 2 264 192

## Beschreibung

Die Erfindung betrifft ein Reibelement umfassend einen Reibbelag, der auf einem Belagsträger angeordnet und mit diesem verbunden ist, sowie ein Trägerelement, wobei der Belagsträger mit dem Trägerelement verbunden ist, wobei weiter für die Verbindung des Belagsträgers mit dem Trägerelement ein Verbindungselement verwendet wird, das durch eine Ausnehmung im Belagsträger und eine Ausnehmung im Trägerelement geführt ist, wobei das Verbindungselement einen Verbindungselementkopf aufweist, der eine größere Außenabmessung aufweist, als eine Innenabmessung der Ausnehmung im Belagsträger, sodass der Verbindungselementkopf auf dem Belagsträger aufliegt, wobei der Belagsträger im Bereich des Verbindungselementkopfes eine Absetzung aufweist, wobei eine Innenabmessung der Absetzung größer ist als die Außenabmessung des Verbindungselementkopfes, sodass der Verbindungselementkopf zumindest teilweise in dieser Absetzung aufgenommen ist. Weiter betrifft die Erfindung eine Kupplungsscheibe für eine Reibungskupplung umfassend mehrere Reibelemente. Die Erfindung betrifft auch ein Verfahren zur Herstellung eines Reibelementes umfassend einen Reibbelag, der auf einem Belagsträger angeordnet und mit diesem verbunden wird, sowie ein Trägerelement, wobei der Belagsträger mit dem Trägerelement verbunden wird, wobei weiter für die Verbindung des Belagsträgers mit dem Trägerelement ein Verbindungselement verwendet wird, das durch eine Ausnehmung im Belagsträger und eine Ausnehmung im Trägerelement geführt wird, wobei das Verbindungselement einen Verbindungselementkopf aufweist, der eine größere Außenabmessung aufweist, als eine Innenabmessung der Ausnehmung im Belagsträger, sodass der Verbindungselementkopf auf dem Belagsträger aufliegt, wobei der Belagsträger im Bereich des Verbindungselementkopfes mit einer Absetzung hergestellt wird, wobei eine Innenabmessung der Absetzung größer hergestellt wird als die Außenabmessung des Verbindungselementkopfes, sodass der Verbindungselementkopf zumindest teilweise in dieser Absetzung aufgenommen ist.

Reibbeläge für Kupplungsscheiben werden Großteils mit Nietverbindungen mit dem jeweiligen Trägerelementen der Reibbeläge verbunden, wie dies im Nachfolgenden noch näher ausgeführt wird. Für die Verbindung sind die Reibbeläge auf Reibbelagsträger angeordnet, beispielsweise auf diese aufgesintert. Die eigentliche Verbindung erfolgt zwischen diesen Reibbelagsträgern und den Trägerelementen. Nachteilig an dieser Verbindung ist, dass die Nietköpfe bis in den Reibbelag reichen, sodass also das zur Verfügung stehende Verschleißvolumen durch die Nietköpfe reduziert wird.

Um diesen Nachteil zu vermeiden, wurde im Stand der Technik vorgeschlagen, generell auf die Nietköpfe zu verzichten. So beschreibt die DE 196 26 686 A1 ein Verfahren zur Befestigung eines aus einem Träger und einem darauf befestigten Reibbelag bestehenden Reibelementes auf einem Trägerteil mittels wenigstens einer nietartigen Verbindung, wobei das Trägerteil zur Herstellung dieser Verbindung zumindest eine Ausnehmung besitzt und diese Verbindung hergestellt wird, indem das Trägerteil und der Träger zumindest partiell aufeinandergelegt werden und das Material des Trägers im Bereich der Ausnehmung des Trägerteils durch Verformung axial durch diese Ausnehmung hindurchgedrängt wird, so dass ein hohler Ansatz entsteht, wobei das Trägerteil während der Verformung als Matrize dient und danach der auf der dem Träger abgewandten Seite des Trägerteils überstehende Bereich des Ansatzes nietkopfartig umgebördelt wird. Nachteilig daran ist, dass die Reibbeläge nicht auswechselbar sind, sodass nach dem vollständigen Verschleiß des nutzbaren Verschleißvolumens der Reibbeläge die gesamte Kupplungsscheibe ausgetauscht werden muss.

Aus der FR 2 916 028 A1 ist ein Reibelement bekannt umfassend einen Reibbelag der auf einem Belagsträger angeordnet und mit diesem verbunden ist, sowie ein Trägerelement, wobei der Belagsträger mit dem Trägerelement verbunden ist, wobei weiter für die Verbindung des Belagsträgers mit dem Trägerelement ein Verbindungselement verwendet wird, das durch eine Ausnehmung im Belagsträger und eine Ausnehmung im Trägerelement geführt ist, wobei das Verbindungselement einen Verbindungselementkopf aufweist, der eine größere Außenabmessung aufweist, als eine Innenabmessung der Ausnehmung im Belagsträger, sodass der Verbindungselementkopf auf dem Belagsträger aufliegt. Der Belagsträger weist im Bereich des Verbindungselementkopfes eine Absetzung auf, wobei eine Innenabmessung der Absetzung größer ist als die Außenabmessung des Verbindungselementkopfes, sodass der Verbindungselementkopf zumindest teilweise in dieser Absetzung aufgenommen ist.

Ein vergleichbares Reibelement ist aus der US 2 264 192 A bekannt.

Der vorliegenden Erfindung liegt die Aufgabe zugrunde, eine Möglichkeit zu schaffen, bei austauschbaren Reibbelägen deren nutzbares Verschleißvolumen zu vergrößern.

Diese Aufgabe wird bei dem eingangs genannten Reibelement dadurch gelöst, dass die Ausnehmung im Trägerelement größer ist als die Ausnehmung im Belagsträger und dass die Absetzung des Belagsträgers im Bereich der Ausnehmung im Trägerelement bis in diese Ausnehmung reicht. Weiter wird die Aufgabe bei der Kupplungsscheibe dadurch gelöst, dass die Reibelemente erfindungsgemäß ausgebildet sind. Schließlich wird die Aufgabe auch mit dem eingangs genannten Verfahren gelöst, wonach vorgesehen ist, dass der Belagsträger im Bereich der Ausnehmung im Trägerelement tiefgezogen wird, sodass der tiefgezogene Bereich in die Ausnehmung (27, 38) im Trägerelement reich.

Es ist damit möglich bei gleichbleibendem Verschleißvolumen der Reibbeläge die Reibelemente dünner auszuführen, womit der benötigte axiale Bauraum der Reibelemente und insbesondere auch der Kupplungsscheibe reduziert werden kann. Durch das Tiefziehverfahren kann zudem die Automatisierung der Befestigung des Belagsträgers mit dem Reibbelag an dem Trägerelement weiter verbessert werden.

Generell wird mit der Ausbildung des Reibelementes eine deutliche Erhöhung des möglichen Verschleißvolumens erreicht. Im Vergleich zu einer herkömmlichen Vernietung kann damit bei gleicher Reibbelagsstärke und insbesondere gleicher Massenträgheit eine Erhöhung des möglichen Verschleißvolumens um bis zu einem Drittel erreicht werden. Die Reibbeläge bleiben aber trotzdem austauschbar, indem die Verbindungselemente lediglich entfernt werden müssen. Dies kann beispielsweise durch das Aufbohren der Nieten erfolgen, wie dies an sich bekannt ist. Andererseits ist es aber damit auch möglich, die Reibbeläge bei gleich bleibender Nutzungsdauer dünner auszuführen, wodurch eine entsprechende Kostenreduktion erzielbar ist. Dieser Vorteil wird durch die Anwendung eines Tiefziehverfahrens noch unterstützt, da dieses Verfahren relativ einfach in einen bestehenden Produktionsablauf integriert werden kann, und damit auch eine automatische Bearbeitung der Reibelemente zur Herstellung der gewünschten Geometrie möglich ist. Es kann also mit einer relativ einfachen Maßnahme ein bedeutender Vorteil hinsichtlich der Reibelemente erreicht.

Es kann dabei auch vorgesehen werden, dass die Absetzung formschlüssig in der Ausnehmung des Trägerelementes aufgenommen ist. Gemäß der entsprechenden Ausführungsvariante des Verfahrens kann vorgesehen werden, dass der Belagsträger über die Absetzung formschlüssig mit dem Trägerelement verbunden wird. Damit kann erreicht werden, dass den Verbindungselementen nur noch die Aufgabe der axialen Sicherung der Verbindung zukommt. Die Verbindungselemente können damit dünner ausgeführt werden.

Vorzugsweise ist eine Höhe des Verbindungselementkopfes so bemessen, dass diese maximal so groß ist, wie eine Schichtdicke des Belagsträgers. Es kann damit erreicht werden, dass der Verbindungselementkopf zur Gänze in der Absetzung des Belagsträgers aufgenommen werden kann, wodurch die voranstehend genannte Effekte bezüglich des möglichen Verschleißvolumens des Reibbelages weiter verbessert werden können.

Zum besseren Verständnis der Erfindung wird diese anhand der nachfolgenden Figuren näher erläutert.

Es zeigen jeweils in schematisch vereinfachter Darstellung:
- Fig. 1: eine Kupplungsscheibe in axialer Ansicht;
- Fig. 2: eine Reibbaugruppe mit zwei Reibelementen nach dem Stand der Technik in Seitenansicht geschnitten;
- Fig. 3: eine Reibbaugruppe mit zwei Reibelementen nach der Erfindung in Seitenansicht geschnitten;
- Fig. 4: ein Beispiel eines Reibelementes in Seitenansicht geschnitten. (nicht Teil der Erfindung)

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

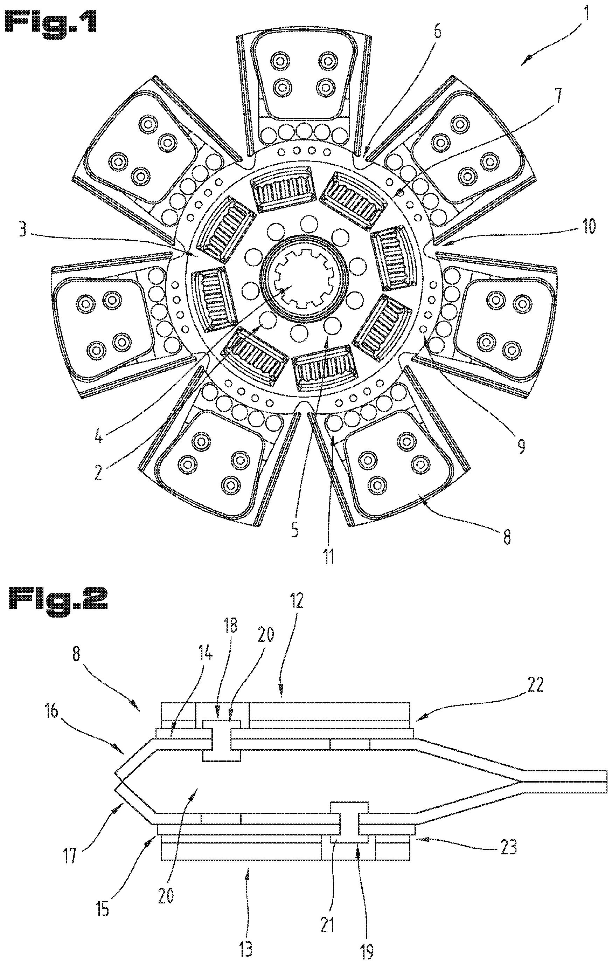

In Fig. 1 ist eine Ausführungsvariante einer bevorzugten Kupplungsscheibe 1 für eine an sich aus dem Stand der Technik bekannte Reibungskupplung dargestellt.

Die Kupplungsscheibe 1 entspricht im Wesentlichen jenen, die aus dem Stand der Technik bekannt sind. Mit im Wesentlichen ist dabei gemeint, dass - wie dies im folgenden noch näher erläutert wird - Unterschiede hinsichtlich des Aufbaus in Bezug auf die am Außenumfang angeordneten Reibelemente bestehen.

Demgemäß weist die Kupplungsscheibe 1 einen, insbesondere scheibenförmigen, Grundkörper 2 auf. Am bzw. im Grundkörper 2 sind mehrere Torsionsfedern 3 angeordnet. Zudem ist zentrisch eine Ausnehmung 4 zur Aufnahme einer nicht dargestellten Welle ausgebildet. Da dies prinzipiell aus dem Stand der Technik bekannt ist, sei zu Einzelheiten dazu auf die einschlägige Literatur verwiesen.

Der Grundkörper 2 umfasst einen scheibenförmigen Träger 5. Der Träger 5 ist zumindest im Bereich eines äußeren Umfangs 6 des Grundkörpers 2 angeordnet. Vorzugsweise erstreckt sich der Träger 5 über den gesamten Grundkörper 5, also von der Ausnehmung 4 bis zum äußeren Umfang 6. Die Ausnehmung 4 ist also vorzugsweise (auch) im Träger 5 ausgebildet. Weiter sind bevorzugt die Torsionsfedern 3 in entsprechenden Aufnahmen im Träger 5 angeordnet.

Es besteht weiter die Möglichkeit, dass am Träger 5 beidseitig, insbesondere scheibenförmige, Abdeckelemente (nicht dargestellt) zumindest bereichsweise angeordnet sind.

Vorzugsweise ist der Träger 5 aus einem Metallblech, insbesondere einem Stahlblech, hergestellt.

Es ist weiter bevorzugt, wenn der Träger 5 einstückig ausgebildet ist, also nicht aus mehreren Teilen zusammengesetzt ist.

Am äußeren Umfang 6 des Trägers 5 sind verteilt, insbesondere regelmäßig verteilt, mehrere Aufnahmebereiche 7 zur Aufnahme von flügelartig ausgebildeten Reibelementen 8 angeordnet bzw. ausgebildet. Im in Fig. 1 konkret dargestellten Beispiel der Kupplungsscheibe 1 sind sieben Aufnahmebereiche 7 und dementsprechend sieben Reibelemente 8 vorhanden. Diese Anzahl soll aber nicht beschränkend verstanden werden. Vielmehr können auch mehr oder weniger Aufnahmebereiche 7 und Reibelemente 8 vorhanden sein.

Die Aufnahmebereich 7 sind durch in radialer Richtung vorstehende Flansche 9 am Trägerelement 5 ausgebildet, insbesondere einstückig mit diesem ausgebildet. Zwischen den Flanschen 9 sind Ausnehmungen 10 ausgebildet, sodass also die einzelnen Flansche 9 in Umfangsrichtung nicht miteinander verbunden sind. Pro Reibelement 8 ist ein eigener Flansch 9 am Träger 5 angeordnet bzw. ausgebildet.

Die Reibelemente 8 sind in den Aufnahmebereichen 7 mit dem Träger 5 verbunden. Dazu sind bevorzugt sowohl in den Flanschen 9 als auch an den Reibelementen 8 Bohrungen vorgesehen, sodass jeweils ein Reibelement 8 mit jeweils einem Flansch 9 über mehrere Nieten 11, die sich durch diese Bohrungen erstrecken, verbunden ist.

Anstelle der Nieten 11 oder zusätzlich zu diesen kann die Fixierung, d.h. die Verbindung der Reibelemente 8 mit den Flanschen 9 des Trägers 5 auch formschlüssig erfolgen, beispielsweise indem der dem Aufnahmebereich 7 zugewandte Endbereich der Reibbaugruppe, insbesondere eines Reibbelagsträgers, zumindest annähernd um 90 ° umgebogen ist und in einer entsprechenden schlitzförmigen Aufnahme des Aufnahmebereichs 7 eingesteckt ist. Der Formschluss kann aber beispielsweise auch durch eine schwalbenschwanzförmige Ausbildung des Endbereichs der Reibbaugruppen, die in entsprechend geformten Ausnehmungen in den Aufnahmebereichen 7 eingreifen, ausgebildet sein.

Der Träger 5 erstreckt sich also bei der Kupplungsscheibe 1 nicht bis zu deren Außenumfang bzw. deren Aussendurchmesser.

Prinzipiell sind auch andere Methoden zur Verbindung der Reibelemente 8 mit den Flanschen 9 möglich, wie z.B. Verschraubungen, Schweißungen, etc.

Die Flansche 9 sind am äußeren, den Reibelementen 8 zugewandten Umfang 6 vorzugsweise zumindest annähernd kreisbogenförmig ausgebildet, wie dies aus Fig. 1 ersichtlich ist. Prinzipiell können sie aber auch eine andere Kontur aufweisen.

Jedes der Reibelemente 8 der Kupplungsscheibe 1 bildet eine eigene Baugruppe. Vorzugsweise sind sämtliche Reibelemente 8 der Kupplungsscheibe 1 gleich ausgebildet.

In Fig. 2 ist ein aus dem Stand der Technik bekanntes Reibelement 8 im Querschnitt dargestellt.

Das Reibelement 8 besteht aus einem ersten Reibbelag 12, einem zweiten Reibbelag 13, einem ersten Belagsträger 14, einem zweiten Belagsträger 15, einem ersten Federelement 16 und einem zweiten Federelement 17.

Der erste Reibbelag 12 ist mit dem ersten Belagsträger 14 verbunden, insbesondere auf diesen aufgesintert. Ebenso ist der zweite Reibbelag 13 mit dem zweiten Belagsträger 15 verbunden, insbesondere auf diesen aufgesintert. Es können aber auch andere Verbindungsmethoden angewandt werden. Beispielsweise können der erste Reibbelag 12 mit dem ersten Belagsträger 14 bzw. der zweite Reibbelag 13 mit dem zweiten Belagsträger 15 verklebt sein, oder mit diesem stoffschlüssig verbunden sein, beispielsweise verlötet sein.

Der erste Belagsträger 14 ist auf das erste Federelement 16 aufgenietet, wozu erste Nieten 17 vorgesehen sind. Der zweite Belagsträger 15 ist auf das zweite Federelement 17 aufgenietet, wozu zweite Nieten 19 vorgesehen sind.

Das erste und das zweite Federelement 16, 17 sind zwischen dem ersten und dem zweiten Belagsträger 14, 15 angeordnet, wobei die Anordnung derart erfolgt, dass ausreichend Platz für die ersten und zweiten Nieten 18, 19 vorhanden ist. Dazu können das erste und das zweite Federelement 17, 18 entsprechend gebogen sein, wie dies in Fig. 2 dargestellt ist, sodass zwischen dem ersten Federelement 16 und dem zweiten Federelement 17 ein Zwischenraum 20 ausgebildet ist.

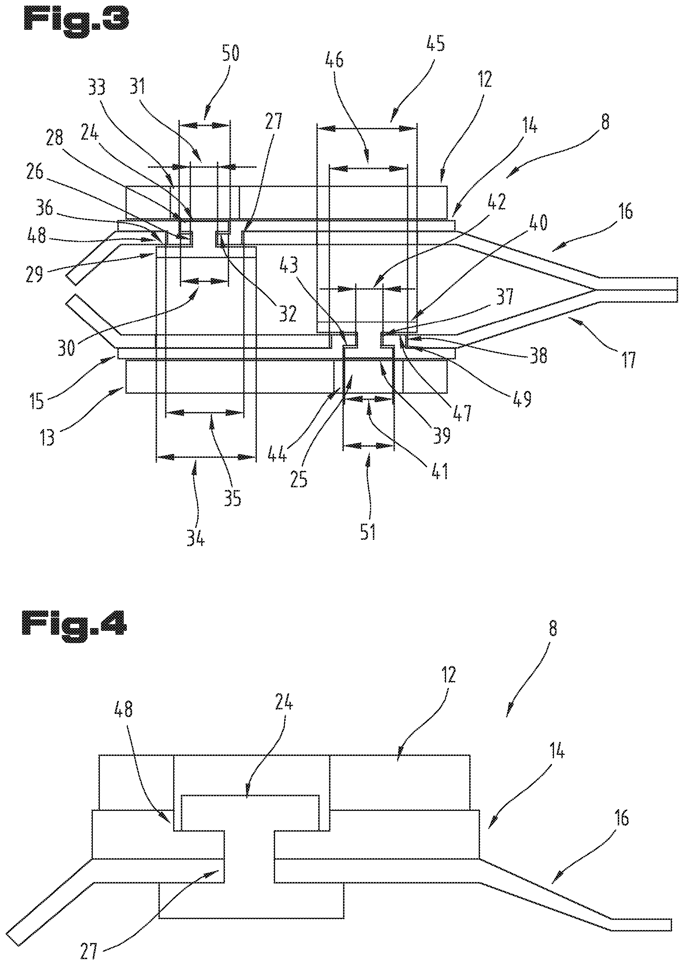

Weiter können die ersten Nieten 18 und die zweiten Nieten 19 in radialer Richtung und Umfangsrichtung versetzt zueinander angeordnet sein, wie dies aus Fig. 4 ersichtliche ist, sodass die in den Zwischenraum stehenden Nietköpfe der ersten und zweiten Nieten 18, 19 einander nicht behindern.

Alternativ dazu kann auch vorgesehen sein, dass im ersten und im zweiten Belagsträger 14, 15 entsprechende Freistellungen ausgebildet sind, die die Nietköpfe der Nieten 18, 19 aufnehmen, sodass die Nietköpfe nicht über die Belagsträger 14, 15 vorragen.

Die Anordnung der Reibbeläge 12, 13 auf federnden Belagträgern 14, 15 erfolgt vorwiegend deshalb, damit die metallischen bzw. metall-keramischen Reibbeläge 12, 13 beim Einrücken keine Schläge bzw. Stöße erfahren, wodurch diese Reibbeläge 12,13 unter umständen frühzeitig Beschädigungen erleiden. Derartige metallische bzw. metall-keramische Reibbeläge 12, 13 sind nämlich im Vergleich zu anderen Reibbelägen, beispielsweise aus harzgebundenen Fasern, deutlich weniger elastisch. Andererseits bieten diese metallischen bzw. metall-keramischen Reibbeläge 12, 13 im Vergleich zu anderen Reibbelägen den Vorteil, dass damit höhere Drehmomente übertragen werden können. Mit der federnden Anordnung der Reibbeläge 12, 13 kann aber auch erreicht werden, dass die Dosierbarkeit der Kupplung beim Einkuppeln zu verbessert werden kann.

Wie aus der Darstellung in Fig. 2 ersichtlich ist, stehen erste Nietköpfe 20 der ersten Nieten 18 und zweite Nietköpfe 21 der zweiten Nieten 19 jeweils in den ersten Reibbelag 12 bzw. zweiten Reibbelag 13 hinein, sodass von dem ersten und dem zweiten Reibbelag 12, 13 eine erste Schicht 22 bzw. eine zweite Schicht 23 nicht nutzbar sind. Es geht damit ein entsprechendes Verschleißvolumen des ersten und des zweiten Reibbelages 12, 13 verloren.

In Fig. 3 ist eine erste Ausführungsvariante eines Reibelementes 8 nach der Erfindung dargestellt.

Das Reibeelement 8 umfasst bzw. besteht wiederum aus dem ersten Reibbelag 12, der auf dem ersten Belagsträger 14 angeordnet und mit diesem verbunden ist, dem ersten Federelement 16, aus dem der erste Belagsträger 14 angeordnet und mit diesem verbunden ist, dem zweiten Reibbelag 13, der auf dem zweiten Belagsträger 15 angeordnet und mit diesem verbunden ist, dem zweiten Federelement 17, aus dem der erste Belagsträger 14 angeordnet und mit diesem verbunden ist. Insofern unterscheidet sich das Reibelement 8 nicht von jenem aus dem Stand der Technik.

Das erste und das zweite Federelement 16, 17 bilden jeweils ein Trägerelement für die mit den Reibbelägen 12 bzw. 13 versehenen Belagsträger 14 bzw. 15.

Es sei an dieser Stelle darauf hingewiesen, dass das oder die Trägerelement(e) nicht zwingend als Federelemente ausgeführt sein müssen. Es ist auch eine starre Ausbildung zumindest eines dieser Trägerelement(e) im Rahmen der Erfindung möglich. Wenn also im Folgenden auf die Federelemente 16, 17 Bezug genommen wird, sind diese Ausführungen mit Ausnahme der Federwirkung der Federelemente 16, 17 auch auf die Trägerelemente übertragbar.

Zur Verbindung des ersten Belagsträgers 14 mit dem ersten Federelement 16 (bzw. Trägerelement) sind erste Verbindungselemente 24 und zur Verbindung des zweiten Belagsträgers 15 mit dem zweiten Federelement 17 (bzw. Trägerelement) sind zweite Verbindungselemente 25 vorgesehen.

Die ersten und/oder zweiten Verbindungselemente 24, 25 sind vorzugsweise Nieten. Es können aber auch andere Verbindungselemente verwendet werden, sofern damit die Entfernung der Belagsträger von den Trägerelementen möglich ist, beispielsweise Schrauben und Muttern.

In Hinblick auf die Entfernung von angenieteten Belagsträgern sei der Vollständigkeit halber darauf hingewiesen, dass diese Verbindungen durch Aufbohren der Nieten gelöst werden können. Insofern werden also Nietverbindungen im Sinne der Erfindung als lösbare Verbindung verstanden, zum Unterschied zu stoffschlüssigen Verbindungen, da diese nur unter größerer Zerstörung der miteinander verbundenen Elemente gelöst werden können.

Es wird also im Sinne der Erfindung unter einer lösbaren Verbindung eine Verbindung verstanden, die ohne Zerstörung oder ausschließlich mit Zerstörung des Verbindungselementes gelöst werden kann.

In Hinblick auf die Anzahl der ersten und/oder zweiten Verbindungselemente 24, 25 sei darauf hingewiesen, dass vorzugsweise jeweils vier erste und/oder zweite Verbindungselemente 24, 25 verwendet werden, wie dies z.B. aus Fig. 1 ersichtlich ist. Es können aber auch weniger als vier erste und/oder zweite Verbindungselemente 24, 25 eingesetzt werden, beispielsweise nur zwei, wobei diese in diesem Fall vorzugsweise jeweils diagonal zueinander versetzt werden. Diagonal ist dabei in Hinblick auf den ersten und/oder zweiten Reibbelag 12, 13 zu verstehen. Die folgenden Ausführungen zu den ersten und/oder zweiten Verbindungselementen 24, 25 sind daher bei einer Mehrzahl von ersten und/oder zweiten Verbindungselementen 24, 25 auch auf diese Mehrzahl zu übertragen.

Das erste Verbindungselement 24 ist durch eine erste Ausnehmung 26, insbesondere eine Bohrung, im ersten Belagsträger 14 und eine erste Ausnehmung 27, insbesondere Bohrung, im ersten Federelement 16 geführt. Um die Verbindung herzustellen weist das erste Verbindungselement 24 einen ersten Verbindungselementkopf 28 und in axialer Richtung des ersten Verbindungselementes 24 einen zweiten, dem ersten Verbindungselementkopf 28 gegenüberliegenden Verbindungelementkopf 29 auf. Die beiden Verbindungselementköpfe 28, 29 bilden die Endbereiche des ersten Verbindungselementes 24.

Der ersten Verbindungselementkopf 28 weist eine größere Außenabmessung 30, insbesondere größeren Außendurchmesser, auf als eine Innenabmessung 31, insbesondere Innendurchmesser, der ersten Ausnehmung 26 des ersten Belagsträgers 14. Es wird damit möglich, dass der erste Verbindungselementkopf 28 mit seiner Unterseite 32 an dem ersten Belagsträger 14 aufliegt.

Der Vollständigkeit halber sein angemerkt, dass auch der erste Reibbelag 12 im Bereich des ersten Verbindungselementes 24 eine Ausnehmung 33, insbesondere Bohrung, aufweist. Die Abmessungen dieser Ausnehmung 33 sind allerdings so bemessen, dass das erste Verbindungselemente 24 zwar durch dies Ausnehmung 33 eingeführt werden kann, das erste Verbindungselement 24 allerdings im verbunden Zustand den ersten Reibbelag 12 vorzugsweise nicht berührt.

Der zweite Verbindungselementkopf 29 weist eine Außenabmessung 34, insbesondere eine Außendurchmesser, auf, die größer ist als eine Innenabmessung 35, insbesondere ein Innendurchmesser, der ersten Ausnehmung 27 des ersten Federelementes 16. Es wird damit möglich, dass der zweite Verbindungselementkopf 29 mit seiner Unterseite 36 an dem ersten Federelement 16 aufliegt.

Das zweite Verbindungselement 25 ist durch eine erste Ausnehmung 37, insbesondere eine Bohrung, im zweiten Belagsträger 15 und eine zweite Ausnehmung 38, insbesondere Bohrung, im zweiten Federelement 17 geführt. Um die Verbindung herzustellen weist das zweite Verbindungselement 25 einen dritten Verbindungselementkopf 39 und in axialer Richtung des zweiten Verbindungselementes 24 einen vierten, dem dritten Verbindungselementkopf 39 gegenüberliegenden Verbindungelementkopf 40 auf. Die beiden Verbindungselementköpfe 39, 40 bilden die Endbereiche des zweiten Verbindungselementes 25.

Der dritte Verbindungselementkopf 39 weist eine größere Außenabmessung 41, insbesondere größeren Außendurchmesser, auf als eine Innenabmessung 42, insbesondere Innendurchmesser, der zweiten Ausnehmung 37 des zweiten Belagsträgers 15. Es wird damit möglich, dass der dritte Verbindungselementkopf 39 mit seiner Unterseite 43 an dem zweiten Belagsträger 15 aufliegt.

Der Vollständigkeit halber sein angemerkt, dass auch der zweite Reibbelag 13 im Bereich des zweiten Verbindungselementes 25 eine Ausnehmung 44, insbesondere Bohrung, aufweist. Die Abmessungen dieser Ausnehmung 44 sind allerdings so bemessen, dass das zweite Verbindungselemente 25 zwar durch dies Ausnehmung 44 eingeführt werden kann, das zweite Verbindungselement 25 allerdings im verbunden Zustand den zweiten Reibbelag 13 vorzugsweise nicht berührt.

Der vierte Verbindungselementkopf 40 weist eine Außenabmessung 45, insbesondere eine Außendurchmesser, auf, die größer ist als eine Innenabmessung 46, insbesondere der Innendurchmesser, der zweiten Ausnehmung 37 des zweiten Federelementes 17. Es wird damit möglich, dass der vierte Verbindungselementkopf 40 mit seiner Unterseite 47 an dem ersten Federelement 17 aufliegt.

Der erste Belagsträger 14 und der zweite Belagsträger 15 weisen im Bereich des ersten Verbindungelementkopfes 28 bzw. des dritten Verbindungselementkopfes 39 eine erste Absetzung 48 bzw. eine zweite Absetzung 49 auf. Eine erste Innenabmessung 50 der ersten Absetzung 48 bzw. eine zweite Innenabmessung 51 der zweiten Absetzung 49 ist größer, als die erste Außenabmessung 30 des ersten Verbindungelementkopfes 28 bzw. die zweite Außenabmessung 41 des dritten Verbindungselementkopfes 39. Es wird damit erreicht, dass der erste Verbindungselementkopf 28 in der ersten Absetzung 48 bzw. der dritte Verbindungelementkopf 39 in der zweiten Absetzung 49 zumindest teilweise, vorzugsweise zu Gänze, aufgenommen sind, also nur teilweise, vorzugsweise zur Gänze, nicht in den ersten Reibbelag 12 bzw. den zweiten Reibbelag 13 hineinreichen. Dadurch kann das mögliche Verschleißvolumen des ersten Reibbelages 12 bzw. des zweiten Reibbelages 13 zu einem höheren Ausmaß, vorzugsweise zur Gänze, für die Momentenübertragung ausgenutzt werden.

Die erste Innenabmessung 50 der ersten Absetzung 48 und die zweite Innenabmessung 51 der zweiten Absetzung 49 werden in der Ebene der ersten bzw. dritten Verbindungselementköpfe 24, 39 zwischen den aufeinander zuweisenden Stirnflächen der ersten Absetzung 48 bzw. zweiten Absetzung 49 gemessen

Die erste Absetzung 48 bzw. die zweite Absetzung 49 werden derart gebildet, dass der an die erste Ausnehmung 26 des ersten Belagsträgers 14 anschließende Bereich bzw. der an die zweite Ausnehmung 37 des zweiten Belagsträgers 15 anschließende Bereich nach unten in Richtung auf das erste Federelement 16 bzw. das zweite Federelement 17 umgebogen wird, wobei der unmittelbar an die erste Ausnehmung 26 des ersten Belagsträgers 14 anschließende Bereich bzw. der unmittelbar an die zweite Ausnehmung 37 des zweiten Belagsträgers 15 anschließende Bereich zumindest annähernd parallel zum ersten Reibbelag 12 bzw. zumindest annähernd parallel zum zweiten Reibbelag 13 verläuft. In diesen unmittelbar anschließenden Bereichen werden der erste Verbindungselementkopf 28 bzw. der dritte Verbindungselementkopf 39 aufgenommen. Der erste Belagsträger 14 bzw. der zweite Belagsträger 15 weisen also einen ersten planen Bereich, einen daran anschließenden zweiten Bereich, der zumindest annähernd senkrecht auf den ersten planen Bereich steht und vorzugsweise einen um den ersten Verbindungselementkopf 28 bzw. dritten Verbindungelementkopf 39 umlaufenden Steg, insbesondere Ringsteg, bildet, und einen dritten Bereich, der zumindest annähernd parallel zum ersten Bereich verläuft und an dem der erste Verbindungselementkopf 28 mit seiner Unterseite 32 bzw. der dritte Verbindungselementkopf 39 mit seiner Unterseite 47 aufliegt, auf. Im Wesentlichen sind die erste Absetzung 48 und die zweite Absetzung 49 also topfförmig ausgebildet.

Die Höhe des zweiten Bereichs ist vorzugsweise so bemessen, dass der erste Verbindungselementkopf 28 bzw. der dritte Verbindungselementkopf 39 zur Gänze in der Vertiefung, die durch die erste Absetzung 48 im ersten Belagsträger 14 bzw. die zweite Absetzung 49 im zweiten Belagsträger 15 gebildet werden, aufgenommen ist.

Vorzugsweise weist dazu der erste Verbindungelementkopf 28 bzw. der dritte Verbindungselementkopf 39 eine Höhe auf, die maximal so groß ist, wie die Schichtdicke des ersten Belagsträgers 14 bzw. des zweiten Belagsträgers 15 in gleicher Richtung wie diese Höhe.

Im Querschnitt betrachtet weisen die erste Absetzung 48 bzw. die zweite Absetzung 49 im Bereich um die erste Ausnehmung 26 im ersten Belagsträger 14 bzw. im Bereich um die zweite Ausnehmung 37 im zweiten Belagsträger 14 einen zumindest annähernd L-förmigen Verlauf auf, wie dies aus Fig. 3 ersichtlich ist.

Es sei darauf hingewiesen, dass sämtliche Ausnehmungen, die voranstehend beschrieben wurden als Durchbrüche ausgebildet sein können bzw. sind.

Die erste Absetzung 48 und die zweite Absetzung 49 werden vorzugsweise durch Tiefziehen des ersten Belagsträgers 14 bzw. des zweiten Belagsträgers 15 in diesen Bereichen hergestellt. Es sind aber auch andere Verfahren zur Herstellung der ersten Absetzung 48 bzw. der zweiten Absetzung 49 möglich, beispielsweise Drücken, etc.

Vorzugsweise wird ein Teil der ersten Absetzung 48 in der ersten Ausnehmung 27 im ersten Federelement 16 bzw. ein Teil der zweiten Absetzung 49 in der zweiten Ausnehmung 38 im zweiten Federelement 17 aufgenommen. Dazu kann die erste Ausnehmung 27 im ersten Federelement 16 bzw. die zweite Ausnehmung 38 im zweiten Federelement 17 größer sein, als die erste Ausnehmung 26 im ersten Belagsträger 14 bzw. größer sein, als die zweite Ausnehmung 37 im zweiten Belagsträger 15.

Es ist dabei weiter bevorzugt, wenn die erste Ausnehmung 27 im ersten Federelement 16 bzw. die zweite Ausnehmung 38 im zweiten Federelement 17 gerade so viel größer ist, dass zwischen dem ersten Belagsträger 14 und dem ersten Federelement 16 im Bereich der ersten Absetzung 48 bzw. zwischen dem zweiten Belagsträger 15 und dem zweiten Federelement 17 im Bereich der zweiten Absetzung 49 ein Formschluss ausgebildet ist. Dies kann beispielsweise dadurch erreicht werden, dass in einem ersten Schritt der erste Belagsträger 14 mit dem ersten Reibbelag 12 auf das erste Federelement 16 bzw. der zweite Belagsträger 15 mit dem zweiten Reibbelag 13 auf das zweite Federelement 17 aufgelegt wird und danach die erste Absetzung 48 bzw. die zweite Absetzung 49 beispielsweise durch Tiefziehen hergestellt werden, sodass sich das Material der ersten Belagsträgers 14 an das Material der ersten Federelementes 16 bzw. das Material des zweiten Belagsträgers 15 an das Material des zweiten Federelementes 17 anlegt.

Wie aus Fig. 3 ersichtlich ist, liegt auch der zweite Verbindungselementkopf 29 des ersten Verbindungelementes 24 am ersten Belagsträger 14 im Bereich der ersten Absetzung 48 bzw. der vierte Verbindungselementkopf 40 des zweiten Verbindungelementes 25 am zweiten Belagsträger 15 im Bereich der zweiten Absetzung 49 an.

In Fig. 4 ist eine weitere und gegebenenfalls für sich eigenständige, aber nicht bevorzugte, Ausführungsform des Reibelementes 8 gezeigt, wobei wiederum für gleiche Teile gleiche Bezugszeichen bzw. Bauteilbezeichnungen wie in den vorangegangenen Fig. 2 und 3 verwendet werden. Um unnötige Wiederholungen zu vermeiden, wird auf die detaillierte Beschreibung in den vorangegangenen Fig. 2 und 3 hingewiesen bzw. Bezug genommen.

Zu sehen ist wiederum der erste Belagsträger 14, auf dem der erste Reibbelag 12 angeordnet und mit diesem verbunden ist. Der erste Belagsträger 14 ist über zumindest ein erstes Verbindungselement 24 verbunden, wie dies voranstehend beschrieben wurde.

Bei dieser Ausführungsvariante des Reibelementes 8 wird die erste Absetzung 48 aber nicht durch tiefziehen des ersten Belagsträgers 14 oder ein damit vergleichbares Verfahren sondern beispielsweise durch ein spannendes Verfahren hergestellt. Es entsteht damit im ersten Belagsträger 14 eine Vertiefung, in der der erste Verbindungselementkopf 28 zumindest teilweise aufgenommen ist.

Ein weiterer Unterschied dieser Ausführungsvariante des Reibelementes 8 besteht darin, dass der erste Belagsträger 14 nicht bis in die erste Ausnehmung 27 im ersten Federelement 16 reicht, sondern zur Gänze im Wesentlichen ebenflächig auf diesem aufliegt. Die erste Ausnehmung 26 im ersten Belagsträger 14 und die erste Ausnehmung 27 im ersten Federelement 16 können daher kleiner gehalten werden, sodass also der Mittelteil des ersten Verbindungselementes 24 zwischen dem ersten Verbindungselementkopf 28 und dem zweiten Verbindungselementkopf 29 gerade durch diese Ausnehmungen 26, 27 geführt sein kann.

Bei sämtlichen Ausführungsvarianten des Reibelementes 8 können die erste Innenabmessung 50 der ersten Absetzung 48 und die zweite Innenabmessung 51 der zweiten Absetzung 49 so gewählt sein, dass zwischen dem ersten Verbindungselementkopf 28 und der ersten Belagsträger 14 bzw. zwischen dem dritten Verbindungselementkopf 39 und dem zweiten Belagsträger 15 im Bereich der seitlichen Stirnflächen des ersten bzw. dritten Verbindungselementkopfes 28, 39 ein Reibschluss entsteht. Mit anderen Worten ausgedrückt, kann also die erste Innenabmessung 50 der ersten Absetzung 48 bzw. die zweite Innenabmessung 51 der zweiten Absetzung 48 gerade so groß sein, dass der erste Verbindungselementkopf 28 bzw. der dritte Verbindungselementkopf 39 gerade hineinpassen.

Weiter sind bei mehr als einem Verbindungselement 24, 25, also beispielsweise zwei oder vier pro Reibbelag 12, 13 vorzugsweise sämtliche entsprechend den voranstehenden Ausführungen gleich ausgeführt, also insbesondere für alle Verbindungselemente 24, 25 entsprechende Absetzungen 48, 49 im Belagsträger 14, 15 ausgebildet.

Werden für eine Kupplungsscheibe 1 mehrere Reibelemente 8 eingesetzt bzw. verwendet, sind bevorzugt sämtliche Reibelemente 8 gleich aufgebaut.

Bei den voranstehend Ausführungsvarianten des Reibelementes 8 sind beide Seiten, das heißt beide Reibbeläge 12, 13 federnd ausgeführt, wofür auf beiden Seiten die Federelemente 16, 17 vorgesehen sind. Es besteht aber Rahmen der Erfindung auch die Möglichkeit, dass ein der beiden Seiten starr ausgeführt ist, also kein Federelement aufweist. In diesem Fall kann anstelle eines Federelementes ein ebenflächiges Trägerelement verwendet werden. Auch in diesem Fall kann der Belagsträger in der voranstehend beschriebenen Art und Weise eine Absetzung aufweisen, in der der Verbindungselementkopf zumindest teilweise aufgenommen ist. Die voranstehenden Ausführungen sind also auch auf diese Ausführungsvarianten übertragbar bzw. anwendbar.

Es kann dabei aber auch vorgesehen sein, dass der zweite, d.h. der starre Reibbelag direkt mit dem Trägerelement verbunden ist. Vorzugsweise erfolgt dabei die Verbindung stoffschlüssig, insbesondere durch verlöten, oder über eine Klebeverbindung. Zudem kann dabei auch vorgesehen sein, dass die Verbindung dieses zweiten Reibbelags mit dem starren Trägerelement nicht über nieten erfolgt, sodass dieser also nietenfrei ist.

Generell muss das Trägerelement nicht zwingend ein Federelement sein. Die voranstehenden Ausführungen sind also auch auf alle Ausführungsvarianten übertragbar bzw. anwendbar bei denen eine Belagsträger für einen Reibbelag lösbar mit einem Trägerelement über ein Verbindungselement der voranstehend genannten Art, also insbesondere eine Niet oder eine Schraube mit Mutter, verbunden wird.

Weiter kann pro Reibelement 8 auch nur ein Reibbelag angeordnet sein. Es ist also nicht zwingend erforderlich, dass das Reibelement 8 beidseitig zur Momentenübertragung wirkt, sondern kann diese auch einseitig wirken.

Obwohl das Reibelement 8 bevorzugt in Kupplungsscheiben 1 verwendet wird, kann das Reibelement auch in anderen Reibbaugruppen eingesetzt werden, beispielsweise in Bremsen.

Bei der Kupplungsscheibe 1 können die beiden Federelemente 16, 17 oder sowohl das Federelement 16 als auch das starre Trägerelement direkt mit dem Träger 5, d.h. dem jeweiligen Flansch 9, über die Nieten 11 und/oder formschlüssig verbunden sein, wozu die beiden Federelemente 16, 17 oder das Federelement 16 und das Trägerelement in diesem Verbindungsbereich unmittelbar aneinander anliegen.

Vorzugsweise weist insbesondere in der Ausführung der Kupplungsscheibe 1 jeder Reibelemente 8 jeweils nur einen ersten Reibbelag 12 und nur einen zweiten Reibbelag 13 auf.

Weiter sind die Reibelemente 8 in der Kupplungsscheibe 1 zumindest annähernd sternförmig am Träger 5 angeordnet, wie dies aus Fig. 1 ersichtlich ist.

Die ersten Reibbeläge 12 und die zweiten Reibbeläge 13 sind vorzugsweise aus einem hierfür üblichen metallischen oder metall-keramischen Sinterwerkstoff hergestellt. Es besteht aber auch die Möglichkeit, diese aus anderen Werkstoffen, wie z.B. harzgebundenen Faserwerkstoffen herzustellen. Auch diese weiteren Arten an Reibbelägen sind in der einschlägigen Literatur ausführlich beschrieben, sodass an dieser Stelle darauf verwiesen sei.

Hinsichtlich der verwendbaren Kleber zur Ausbildung der Klebestellen sei ebenfalls auf die einschlägige Literatur verwiesen, da die Verklebung von Reibbelägen an sich bekannt ist.

Die ersten und zweiten Belagsträger 14, 15 können aus einem eisenbasierten Werkstoff bestehen, beispielsweise aus einem Stahl, insbesondere einem Baustahl oder einem Vergütungsstahl..

Die ersten und zweiten Federelemente 16, 17 können aus einem, insbesondere warmfesten, Federstahl bestehen.

Generell können die Trägerelemente aus einem eisenbasierten Werkstoff bestehen, beispielsweise aus einem Stahl, insbesondere einem Baustahl oder einem Vergütungsstahl. bestehen.

Die Ausführungsbeispiele zeigen mögliche Ausführungsvarianten des Kupplungsscheibe 1 bzw. der Reibelemente 8, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus der Kupplungsscheibe 1 bzw. der Reibelemente 8 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Kupplungsscheibe | 36 | Unterseite |
| 2 | Grundkörper | 37 | Ausnehmung |
| 3 | Torsionsfeder | 38 | Ausnehmung |
| 4 | Ausnehmung | 39 | Verbindungselementkopf |
| 5 | Träger | 40 | Verbindungselementkopf |
| | | | |
| 6 | Umfang | 41 | Außenabmessung |
| 7 | Aufnahmebereich | 42 | Innenabmessung |
| 8 | Reibelement | 43 | Unterseite |
| 9 | Flansch | 44 | Ausnehmung |
| 10 | Ausnehmung | 45 | Außenabmessung |
| | | | |
| 11 | Niet | 46 | Innenabmessung |
| 12 | Reibbelag | 47 | Unterseite |
| 13 | Reibbelag | 48 | Absetzung |
| 14 | Belagsträger | 49 | Absetzung |
| 15 | Belagsträger | 50 | Innenabmessung |
| | | | |
| 16 | Federelement | 51 | Innenabmessung |
| 17 | Federelement | | |
| 18 | Niet | | |
| 19 | Niet | | |
| 20 | Nietkopf | | |
| | | | |
| 21 | Nietkopf | | |
| 22 | Schicht | | |
| 23 | Schicht | | |
| 24 | Verbindungselement | | |
| 25 | Verbindungselement | | |
| | | | |
| 26 | Ausnehmung | | |
| 27 | Ausnehmung | | |
| 28 | Verbindungselementkopf | | |
| 29 | Verbindungselementkopf | | |
| 30 | Außenabmessung | | |
| | | | |
| 31 | Innenabmessung | | |
| 32 | Unterseite | | |
| 33 | Ausnehmung | | |
| 34 | Außenabmessung | | |
| 35 | Innenabmessung | | |

## Patentansprüche

1. Reibelement (8) umfassend einen Reibbelag (12, 13), der auf einem Belagsträger (14, 15) angeordnet und mit diesem verbunden ist, sowie ein Trägerelement, insbesondere Federelement (16, 17), wobei der Belagsträger (14, 15) mit dem Trägerelement verbunden ist, wobei weiter für die Verbindung des Belagsträgers (14, 15) mit dem Trägerelement ein Verbindungselement (24, 25) verwendet wird, das durch eine Ausnehmung (26, 37) im Belagsträger (14, 15) und eine Ausnehmung (27, 38) im Trägerelement geführt ist, wobei das Verbindungselement (24, 25) einen Verbindungselementkopf (28, 39) aufweist, der eine größere Außenabmessung (30, 41) aufweist, als eine Innenabmessung (31, 42) der Ausnehmung (26, 37) im Belagsträger (14, 15), sodass der Verbindungselementkopf (28, 39) auf dem Belagsträger (14, 15) aufliegt, wobei der Belagsträger (14, 15) im Bereich des Verbindungselementkopfes (28, 39) eine Absetzung (48, 49) aufweist, wobei eine Innenabmessung (50, 51) der Absetzung (48, 49) größer ist als die Außenabmessung (30, 41) des Verbindungselementkopfes (28, 39), sodass der Verbindungselementkopf (28, 39) zumindest teilweise in dieser Absetzung (48, 49) aufgenommen ist, **dadurch gekennzeichnet, dass** die Ausnehmung (27, 38) im Trägerelement größer ist als die Ausnehmung (26, 37) im Belagsträger (14, 15) und dass die Absetzung (48, 49) des Belagsträgers (14, 15) im Bereich der Ausnehmung (27, 38) im Trägerelement bis in diese Ausnehmung (27, 38) reicht.

2. Reibelement (8) nach Anspruch 1, **dadurch gekennzeichnet, dass** die Absetzung (48, 49) formschlüssig in der Ausnehmung (27, 38) des Trägerelementes aufgenommen ist.

3. Reibelement (8) nach Anspruch 1 oder 2, **dadurch gekennzeichnet, dass** der Verbindungselementkopf (28, 39) eine Höhe aufweist, die maximal so groß ist, wie eine Schichtdicke des Belagsträgers (14, 15).

4. Kupplungsscheibe (1) für eine Reibungskupplung umfassend mehrere Reibelemente (8), **dadurch gekennzeichnet, dass** die Reibelemente (8) nach einem der vorhergehenden Ansprüche ausgebildet sind.

5. Verfahren zur Herstellung eines Reibelementes (8) umfassend einen Reibbelag (12, 13), der auf einem Belagsträger (14, 15) angeordnet und mit diesem verbunden wird, sowie ein Trägerelement, insbesondere Federelement (16, 17), wobei der Belagsträger (14, 15) mit dem Trägerelement verbunden wird, wobei weiter für die Verbindung des Belagsträgers (14, 15) mit dem Trägerelement ein Verbindungselement (24, 25) verwendet wird, das durch eine Ausnehmung (26, 37) im Belagsträger (14, 15) und eine Ausnehmung (27, 38) im Trägerelement geführt wird, wobei das Verbindungselement (24, 25) einen Verbindungselementkopf (28, 39) aufweist, der eine größere Außenabmessung (30, 41) aufweist, als eine Innenabmessung (31, 42) der Ausnehmung (26, 37) im Belagsträger (14, 15), sodass der Verbindungselementkopf (28, 39) auf dem Belagsträger (14, 15) aufliegt, wobei der Belagsträger (14, 15) im Bereich des Verbindungselementkopfes (28, 39) mit einer Absetzung (48, 49) hergestellt wird, wobei eine Innenabmessung (50, 51) der Absetzung (48, 49) größer hergestellt wird als die Außenabmessung (30, 41) des Verbindungselementkopfes (28, 39), sodass der Verbindungselementkopf (28, 39) zumindest teilweise in dieser Absetzung (48, 49) aufgenommen ist, **dadurch gekennzeichnet, dass** der Belagsträger (14, 15) im Bereich der Ausnehmung (27, 38) im Trägerelement tiefgezogen wird, sodass der tiefgezogene Bereich in die Ausnehmung (27, 38) im Trägerelement reicht.

6. Verfahren nach Anspruch 5, **dadurch gekennzeichnet, dass** der Belagsträger (14, 15) über die Absetzung (48, 49) formschlüssig mit dem Trägerelement verbunden wird.

## Claims

1. A friction element (8) comprising a friction lining (12, 13), which is arranged on a lining carrier (14, 15) and is connected to the lining carrier (14, 15), as well as a carrier element, in particular a spring element (16, 17), in which the lining carrier (14, 15) is connected to the carrier element, in which further for the connection of the lining carrier (14, 15) to the carrier element a connecting element (24, 25) is used which is guided through a recess (26, 37) in the lining carrier (14, 15) and a recess (27, 38) in the carrier element, wherein the connecting element (24, 25) comprises a connecting element head (28, 39), which has a greater external dimension (30, 41) than an internal dimension (31, 42) of the recess (26, 37) in the lining carrier (14, 15), so that the connecting element head (28, 39) is resting on the lining carrier (14, 15), wherein the lining carrier (14, 15) in the region of the connecting element head (28, 39) comprises a shoulder (48, 49), wherein an internal dimension (50, 51) of the shoulder (48, 49) is greater than the external dimension (30, 41) of the connecting element head (28, 39), so that the connecting element head (28, 39) is received at least partly in said shoulder (48, 49), **characterized in that** the recess (27, 38) in the carrier element is greater than the recess (26, 37) in the lining carrier (14, 15) and the shoulder (48, 49) of the lining carrier (14, 15) in the region of the recess (27, 38) in the carrier element extends into this recess (27, 38).

2. The friction element (8) as claimed in claim 1, wherein the shoulder (48, 49) is received in a form-lock manner in the recess (27, 38) of the carrier element.

3. The friction element (8) as claimed in claim 1 or 2, wherein the connecting element head (28, 39) has a height that is at the maximum as high as a layer thickness of the lining carrier (14, 15).

4. A clutch plate (1) for a friction clutch comprising a plurality of friction elements (8), wherein the friction elements (8) are designed as claimed in any one of the preceding claims.

5. A method for producing a friction element (8) comprising a friction lining (12, 13), which will be arranged on a lining carrier (14, 15) and will be connected to the lining carrier (14, 15), as well as a carrier element, in particular a spring element (16, 17), in which the lining carrier (14, 15) will be connected to the carrier element, in which further for the connection of the lining carrier (14, 15) to the carrier element a connecting element (24, 25) is used which is guided through a recess (26, 37) in the lining carrier (14, 15) and a recess (27, 38) in the carrier element, in which the connecting element (24, 25) comprises a connecting element head (28, 39), which has a greater external dimension (30, 41) than an internal dimension (31, 42) of the recess (26, 37) in the lining carrier (14, 15), so that the connecting element head (28, 39) rests on the lining carrier (14, 15), wherein the lining carrier (14, 15) in the region of the connecting element head (28, 39) will be produced with a shoulder (48, 49), wherein an internal dimension (50, 51) of the shoulder (48, 49) will be made to be greater than the external dimension (30, 41) of the connecting element head (28, 39), so that the connecting element head (28, 39) is received at least partly in said shoulder (48, 49), **characterized in that** the lining carrier (14, 15) will be deep-drawn in the region of the recess (27, 38) in the carrier element, so that the deep-drawn region extends into the recess (27, 38) in the carrier element.

6. The method as claimed in claim 5, wherein the lining carrier (14, 15) will be connected via the shoulder (48, 49) in a form-lock manner to the carrier element.

## Revendications

1. Élément de friction (8) comprenant une garniture de friction (12, 13), qui est disposée sur un support de garniture (14, 15) et est reliée avec celui-ci, ainsi qu'un élément de support, plus particulièrement un élément à ressort (16, 17), le support de garniture (14, 15) étant relié avec l'élément de support, moyennant quoi, en outre, pour la liaison du support de garniture (14, 15) avec l'élément de support, un élément de liaison (24, 25) est utilisé, qui est guidé à travers un évidement (26, 37) dans le support de garniture (14, 15) et un évidement (27, 38) dans l'élément de support, l'élément de liaison (24, 25) comprenant une tête d'élément de liaison (28, 39) qui présente une dimension externe (30, 41) supérieure à une dimension interne (31, 42) de l'évidement (26, 37) dans le support de garniture (14, 15), de façon à ce que la tête d'élément de liaison (28, 39) s'appuie sur le support de garniture (14, 15), le support de garniture (14, 15) comprenant, au niveau de la tête d'élément de liaison (28, 39), un épaulement (48, 49), une dimension interne (50, 51) de l'épaulement (48, 49) étant supérieure à la dimension externe (30, 41) de la tête d'élément de liaison (28, 39), de façon à ce que la tête d'élément de liaison (28, 39) soit logée au moins partiellement dans cet épaulement (48, 49), **caractérisé en ce que** l'évidement (27, 38) dans l'élément de support est plus grand que l'évidement (26, 37) dans le support de garniture (14, 15) et **en ce que** l'épaulement (48, 49) du support de garniture (14, 15) au niveau de l'évidement (27, 38) arrive dans l'élément de support jusque dans cet évidement (27, 38).

2. Élément de friction (8) selon la revendication 1, **caractérisé en ce que** l'épaulement (48, 49) est logé par complémentarité de forme dans l'évidement (27, 38) de l'élément de support.

3. Élément de friction (8) selon la revendication 1 ou 2, **caractérisé en ce que** la tête d'élément de liaison (28, 39) présente une hauteur qui est au maximum aussi grande qu'une épaisseur de couche du support de garniture (14, 15).

4. Disque d'embrayage (1) pour un embrayage à friction comprenant plusieurs éléments de friction (8), **caractérisé en ce que** les éléments de friction (8) sont conçus selon l'une des revendications précédentes.

5. Procédé de fabrication d'un élément de friction (8) comprenant une garniture de friction (12, 13), qui est disposé sur un support de garniture (14, 15) et est reliée avec celui-ci, ainsi qu'un élément de support, plus particulièrement un élément à ressort (16, 17), le support de garniture (14, 15) étant relié avec l'élément de support, moyennant quoi, en outre, pour la liaison du support de garniture (14, 15) avec l'élément de support, un élément de liaison (24, 25) est utilisé, qui est guidé à travers un évidement (26, 37) dans le support de garniture (14, 15) et un évidement (27, 38) dans l'élément de support, l'élément de liaison (24, 25) comprenant une tête d'élément de liaison (28, 39) qui présente une dimension externe (30, 41) supérieure à une dimension interne (31, 42) de l'évidement (26, 37) dans le support de garniture (14, 15), de façon à ce que la tête d'élément de liaison (28, 39) s'appuie sur le support de garniture (14, 15), le support de garniture (14, 15) étant réalisé, au niveau de la tête d'élément de liaison (28, 39), avec un épaulement (48, 49), une dimension interne (50, 51) de l'épaulement (48, 49) étant réalisée de façon à être supérieure à la dimension externe (30, 41) de la tête d'élément de liaison (28, 39), de façon à ce que la tête d'élément de liaison (28, 39) soit logée au moins partiellement dans cet épaulement (48, 49), **caractérisé en ce que** le support de garniture (14, 15) est embouti dans l'élément de support au niveau de l'évidement (27, 38), de façon à ce que la partie emboutie atteigne l'évidement (27, 38) dans l'élément de support.

6. Procédé selon la revendication 5, **caractérisé en ce que** le support de garniture (14, 15) est relié, par l'intermédiaire de l'épaulement (48, 49), par complémentarité de forme avec l'élément de support.
